# EUROPEAN PATENT SPECIFICATION

(11) **EP 1 872 648 B1**
(45) Date of publication and mention of the grant of the patent: **22.04.2009**
(21) Application number: 07012277.5
(22) Date of filing: 22.06.2007
(51) Int. Cl.: A01F 15/07

(54) **Film letting-off device for roll baler, and method for winding film on rolled bale**
Vorrichtung zum Ablassen von Folie für eine Rollballenpresse und Verfahren zum Wickeln von Folie um den gerollten Ballen
Dispositif de déroulement de film pour ramasseuse-enrouleuse de fourrage, et procédé d'enroulement de film sur une ramasseuse-enrouleuse de fourrage

(30) Priority: 29.06.2006 JP 2006179285; 20.11.2006 JP 2006312478
(43) Date of publication of application: 02.01.2008
(60) Divisional application: 08019109.1
(73) Proprietor: Takakita Co. Ltd, Nabari-City Mie 518-0441 (JP)
(72) Inventor: Ikuta, Yoshihito, Nabari-City, Mie-Pref., 518-0441 (JP); Yoshida, Hidenori, Nabari-City, Mie-Pref., 518-0441 (JP); Fujinaga, Wataru, Nabari-City, Mie-Pref., 518-0441 (JP); Shirasaki, Yoshiharu, Nabari-City, Mie-Pref., 518-0441 (JP)
(74) Representative: Kramer - Barske - Schmidtchen

(56) References cited:
- WO-A-00/64237
- DE-A1- 10 045 843
- GB-A- 2 144 102
- GB-A- 2 163 701
- JP-A- 2006 067 917
- US-B1- 6 651 408

## Description

### [Technical Field]

The present invention relates to a film letting-off device for a roll baler, which is arranged upstream of a roll baling device, for letting off a film so that a roll bale compressed from hay and so on into a rolled shape by a roll baling device may be covered and wrapped on its outer circumference with the film, and a method for winding the roll bale with the film.

### [Background Art]

The roll baler picks up the hay mowed down on the field with a pickup device, throws the hay into a compression-shaping chamber, compression-shapes the thrown hay into a rolled bale by means of a plurality of shaping bars running around the circumference of the compression-shaping chamber, and then wraps the rolled bale on the outer circumference so that the rolled bale may be preventing from becoming "loose". The conventional wrapping method of the rolled bale is divided into the "twining method", by which the rolled bale is wound on its outer circumference with the string called the "twine", and the "netting method", by which the rolled bale is wound on its outer circumference with a net. The "twining method" is advantageous in the low cost for the wrapping material per rolled bale, but is accompanied by the problems that it takes a long time to bind, and that it is not easy to unbale. On the other hand, the "netting method" is advantageous in the short wrapping time, but has a problem that the unbaling is not easy like the "twining method". In both the "twining method" and the "netting method", more specifically, the twine or net on the outer circumference of the rolled bale is frozen while biting into the stems of feeds, in case the rolled bale is disassembled to be fed in winter in cold places where the rolled bale stored is frozen on its surface. As a result, both (i.e., the twine or net and the stems of the feed) become integral and difficult to separate so that the disassembly of the rolled bale takes much effort.

The invention eliminates the defect which is caused in case the net letting-off device is used as it is when the film is employed in place of the twine or net as the material for wrapping the rolled bale, and makes it possible to let off the film smoothly thereby to wrap the rolled bale with the film. At first, the description is made on the constitution of the net letting-off device of the prior art, and on the problems of the case, in which the film is let off by employing the net letting-off device as it is. The reason why the film is selected as the material for wrapping the rolled bale is described in the following. Even in case the rolled bale surface is frozen in winter, the film is the band-shaped wrapping material matching the width of the rolled bale, unlike the string-shaped wrapping material such as the twine or net, and covers the outer circumference as a whole so that it is not integrated with the feed. Therefore, the film is advantageous in that the rolled bale can be disassembled by peeling the film exclusively with relative ease. A typical film is made of plastics.

Film letting-off devices are known from WO 00/64237 and 100 45 843 A1.

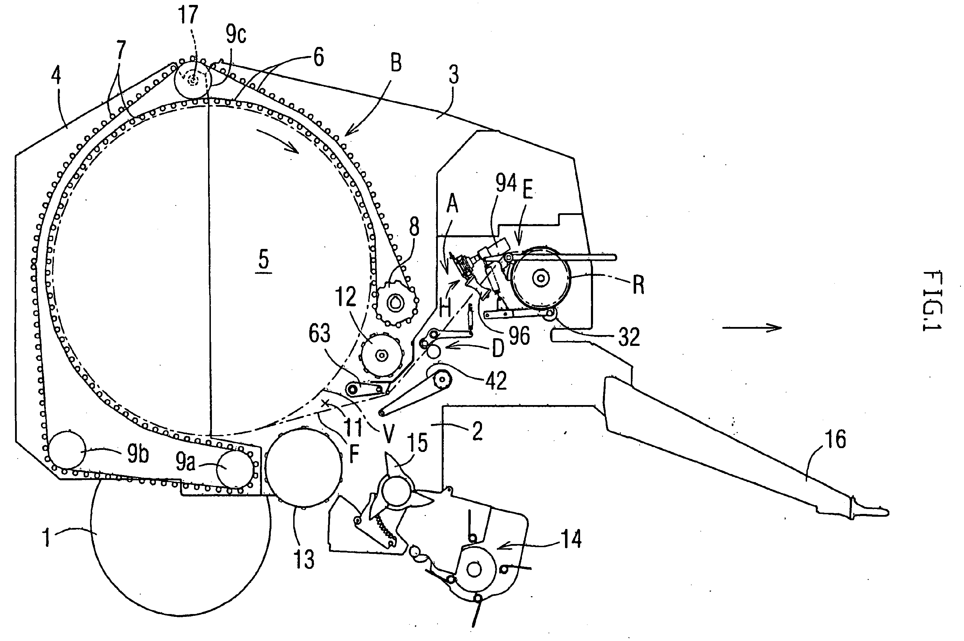

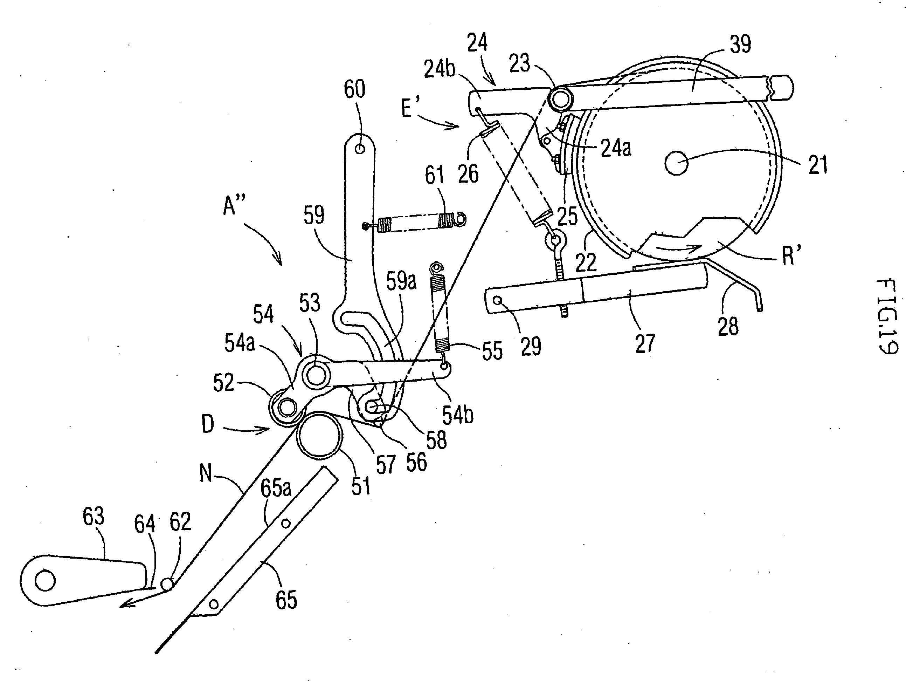

FIG. 19 is a front arrangement elevation of a major portion of a net letting-off device A" in the roll baler as described in JP-A-2006-67917. In the fundamental constitution of the net letting-off device A", a net N is let off by a drive roller device D from a net roll R' of a net rolling device E', and the net N let off is turned several times to wrap the outer circumference of a rolled bale V as the rolled bale V is rotated by a roll baling device B (both should be referred to FIG. 1). The net rolling device E' is provided with: a net roll supporting shaft 21' for supporting the net roll R'; a brake drum 22 for rotating integrally with the net roll R'; a brake arm shaft 23 arranged in parallel with the supporting shaft 21' at the letting-off portion of the net roll R'; a brake shoe 25 mounted on the leading end portion of one arm portion 24a of a brake arm 24 and adapted to turn on the brake arm shaft 23, for sliding to contact with the brake drum 22; and an outer circumference contacting plate member 28 mounted on the leading end portion of a tension arm 27 connected through a tension spring 26 to the leading end portion of the other arm portion 24b of the brake arm 24, and pushed to contact with the outer circumference of the net roll R'. The tension arm 27 is turnably supported at its one end portion through a pivot pin 29.

On the other hand, the drive roller device D is constituted of a rotationally driving rubber roller 51, and an aluminum roller 52 driven to rotate in contact with the rubber roller 51. The individual rollers 51 and 52 constituting the drive roller device D are made of the above-specified materials for preventing static electricity from occurring in the net N. When a pulling force is applied by the drive roller device D to the net N wound on the net roll R', the net N is let off, while sliding to contact with the outer circumference of the irrotational brake arm shaft 23 against the frictional force between the brake shoe 25 and the brake drum 22. By the restoring force of the tension spring 26, the brake shoe 25 and the outer circumference contacting plate member 28 are always pushed by the predetermined force onto the brake drum 22 and the net roll R', respectively. As the winding diameter of the net roll R' becomes the smaller, the spacing between the individual connected portions of the two ends of the tension spring 26 becomes the shorter to make the restoring force of the tension spring 26 the smaller. As a result, the aforementioned "predetermined force" becomes the lower as the winding diameter of the net roll R' becomes the smaller. Specifically, the torque to extract the net N from the net roll R' becomes the lower as the winding diameter of the net roll R' becomes the smaller, but the pulling force (or the extracting force) of the net N is substantially constant. In other words, the mechanism thus far described is adopted so as to keep the pulling force (or the extracting force) of the net N substantially constant at all times independently of the winding diameter of the net roll R'.

On the other hand, the aluminum roller 52 constituting the drive roller device D is borne on the leading end portion of one arm portion 54a of a tension arm 54 to turn on an arm pin 53, and the leading end portion of the other arm portion 54b of the tension arm 54 is connected to the other end of a tension spring 55 having its one end fixed, so that the aluminum roller 52 is pushed onto the rubber roller 51 by the restoring force of the tension spring 55. The net N is narrowed, if pulled as it is by applying the pulling force, and it may fail to wrap the whole outer circumference of the rolled bale V. Slightly upstream of the drive roller device D, therefore, there is arranged a net widening bar 56 for enlarging the width of the net N being pulled. The net widening bar 56 is mounted on the leading end portion of an arm 57 supported on the arm shaft 53, and a retaining pin 58 protruded from the side face of the leading end portion of that arm 57 is retained in a retaining groove 59a of a slide arm 59 having its root end portion turnably borne through a pivot pin 60. The slide arm 59 is biased in one direction by the restoring force of a tension spring 61 so that the running path of the net N to run while being tensed between the portions of the rubber roller 51 and the aluminum roller 52 constituting the drive roller device D and the portion of the brake arm shaft 23 is bent at the portion of the net widening bar 56.

The net N, as let off the net roll R' by the drive roller device D, runs obliquely downward so that it is widened by the net widening bar 56. The net N having run obliquely downward over the drive roller device D runs at a gentle inclination at the portion of a guide roller 62, so that it is taken up on the outer circumference of the rolled bale V. When the net N is wound by a predetermined number of times on the outer circumference of the rolled bale V, a knife base 63 arranged near the guide roller 62 is turned downward so that the net N is cut by a knife 64 at the leading end. The leading end of the cut net N is supported to hanging down from the slope face 65a of a sliding plate 65, which is arranged at an inclination generally parallel to the running path of the net N joining the drive roller device D and the guide roller 62. The net N waits in this state till the next wrapping operation.

The following problems arise, if the film is let off by replacing the net roll R' of the aforementioned net letting-off device A" by a film roll. (1) Since the brake arm shaft 23 has the irrotational structure, it can let off the net N while sliding it thereon, in case the net N does not make the entire contact so that the sliding resistance is not serious. However, the film makes the entire contact with the brake arm shaft 23 to increase the sliding contact excessively so that the film cannot be let off while sliding on the brake arm shaft 23 having the irrotational structure. (2) For similar reasons, the outer circumference contacting plate member 28 for detecting the winding diameter of the net roll R' to become smaller as the time elapses makes sliding contact with the outer circumference of the rotating net roll R'. In the case of the net N, no problem arises because the sliding resistance to the outer circumference contacting plate member 28 is low. In the case of the film, however, the sliding resistance to the outer circumference contacting plate member 28 becomes so high as to damage the film itself. (3) When the film wrapping just before is ended, its end portion waits while contacting with the upper face of the sliding plate 65. In case the film end portion is to be wound on the outer side of the rolled bale V for the next wrapping by driving the rubber roller 51, it is disabled to enter the side of the rolled bale V by the inclination of the sliding plate 65, if soiled with dust or water, but is left on the sliding plate 65 so that the film end portion finally wraps the rubber roller 51 and the aluminum roller 52.

As a result, the film cannot be let off by using the net letting-off device A" shown in FIG. 19, as it is.

On the other hand, the "film wrapping" has the aforementioned advantage that the rolled bale can be disassembled by peeling off only the film relatively easily because the film is not integrated with the feed. In the "film wrapping" case, however, the film is easily soiled with the water such as fog or rain, and easily generates static electricity. This raises a problem that the film is caught on the rollers while running in the film running path so that it cannot be smoothly let off. Because the film is liable to flutter in the wind, there arises a problem that the film is folded over at its two widthwise end portions and is wrinkled when it wraps. The latter problem easily arise especially at the instant when the tension to act on the film is low or little, such as when or after the rolled bale is wrapped with the film.

### [Object of the Invention]

The invention contemplates to provide a film letting-off device, which can let off a film smoothly when a rolled bale is to be wrapped with the film, so as to shorten the wrapping time period, to reduce the wrapping material and to facilitate the rolled bale assembly, and which eliminates the aforementioned problems, as might otherwise be caused by the flutter of the film with the wind, by a simple constitution.

### [Summary of the Invention]

According to a first aspect of the invention, there is provided a film letting-off device for the roll baler, which is arranged immediately upstream of a roll baling device for covering and wrapping the outer circumference of a rolled bale with a film, for letting off said film. The film letting-off device comprises: a film rolling device constituted such that a brake drum is integrally mounted on a film roll supporting shaft for supporting a film roll wound in a roll shape, such that a brake arm shaft acting as a film letting-off shaft is arranged in the letting-off portion of said film roll and in parallel with said film roll supporting shaft, and such that a brake shoe for turning on said brake arm shaft and an outer circumference contacting member for contacting with the outer circumference of the film roll supported on said film roll supporting shaft are pushed by biasing means onto the brake drum and the film roll, respectively; a drive roller device arranged midway of a film running path between the letting-off portion of said film rolling device and a coverage starting portion for starting the coverage of a rolled bale shaped by the roll baling device, for applying a pulling force to the film wound on said film roll, thereby to extract said film; and a film end portion supporting device arranged at an inclination in the portion immediately upstream of said coverage starting portion in said film running path, for supporting said film end portion having been wrapped with the film let off from said film letting-off shaft and guided by a guide roller arranged midway of the film running path to coat said rolled bale, till a next wrapping. The film letting-off device is characterized in that a freely rotating idle roller is fitted on the outer side of the brake arm shaft constituting said film rolling device, and in that said outer circumference contacting member is constituted of a rotatable roller made of a material hard to generate static electricity.

According to the first aspect of the invention, the freely rotating idle roller is fitted on the outer side of the brake arm shaft constituting the film rolling device so that the film to be let off from the film roll is let off while being wound on the idle roller. As a result, the friction between the film and the idle roller is a rolling friction, which is far lower than the sliding friction on the irrotational brake arm shaft so that the film is smoothly let off without any damage from the film roll. Moreover, in order to detect the winding diameter of the film roll to become smaller as the time progresses, thereby to reduce the frictional force between the brake shoe and the brake drum gradually to set the extracting force of the film substantially constant, the outer circumference contacting member to contact with the outer circumference of the film roll is constituted of the rotatable roller made of the material hard to generate the static electricity. As a result, the frictional force between the outer circumference contacting member and the film roll becomes the rolling friction thereby to eliminate the drawbacks that the film is damaged by the contact with the outer circumference contacting member, and that the static electricity is generated in the film to trouble the let-off of that film.

A second aspect of the invention is characterized in that in the first aspect of the present invention, said film end portion supporting device is constituted of a conveyor belt running circumferentially at all times.

According to the second aspect of the invention, since the film end portion supporting member, as arranged at an inclination at the portion immediately before the rolled bale in the film running path is covered, is constituted of the conveyor belt running circumferentially at all times. As a result, the film end portion waiting on the conveyor belt arranged at the inclination is continuously fed obliquely backward and downward at all times so that it does not get entangled on the side of the drive roller device. When the drive roller device is started to feed the film after the rolled bale was formed to a predetermined diameter, the film end portion is moved, as it is, obliquely downward while being guided by the circumferential run of the conveyor belt, and is then smoothly wound on the outer circumference of the rolled bale.

A third aspect of the invention is characterized in that in the first or second aspect of the present invention, said film running path has width enlarging rollers incorporated thereinto for enlarging the width of the running film.

When the pulling force is applied to the film so as to extract the film from the film roll, the width size is reduced so that the outer circumference of the rolled bale cannot be wrapped all over its surface with the film of the specified width selected. According to the third aspect of the invention, however, the film running path has the width enlarging rollers incorporated thereinto for enlarging the width of the running film forcibly. Even if the pulling force is applied to the film, therefore, the film holds a specified width substantially so that the rolled bale can be wrapped with the film of the specified width all over its outer circumference without any trouble.

### [Brief Description of the Drawings]

FIG. 1 is an entire view of a roll baler provided with a film letting-off device A according to the invention.
FIG. 2 is an enlarged view of the film letting-off device A.
FIG. 3 is a sectional view taken in the direction arrow X of FIG. 2 (or a sectional top plan view of a film rolling device E).
FIG. 4 is a perspective view of a portion of the film rolling device E on the side of a brake shoe 25.
FIG. 5 is a front elevation of a drive roller device D and a power transmission mechanism of a driving cage roller 43 for causing a conveyor belt 42 to run circumferentially thereon.
FIG. 6 is a top plan view of the same.
FIG. 7 presents front elevations (A) and (B) (taken in the direction of arrow J of FIG. 2) of a width reducing device H of the cases, in which a film F is let off with a specified width (or an ordinary width) and a reduced width, respectively.
FIG. 8 is an enlarged sectional view taken along line Y - Y of FIG. 7(B).
FIG. 9 presents enlarged sectional views (A) and (B), which are enlarged along lines Z1- Z1 and Z2- Z2 of FIG. 7 (B), respectively.
FIG. 10 is a front arrangement elevation of the film letting-off device A, and shows the state, in which a film end portion Fa hanging down over the conveyor belt 42 is smoothly transferred to the side of the rolled bale V.
FIG. 11 is a front arrangement elevation of a film letting-off device A', and shows the state, in which the film end portion Fa hanging down over the sliding plate 65 gets entangled on the side of the drive roller device D.
FIG. 12 is a schematic perspective view showing the initial state, in which the film F is rolled on the rolled bale V.
FIG. 13 is a schematic perspective view showing the midway state, in which the film F is rolled on the rolled bale V.
FIG. 14 is a schematic perspective view showing the state immediately before the film F is rolled up on the rolled bale V.
FIG. 15 is a schematic perspective view showing the state the film F is cut after rolled up.
FIG. 16 is an entire view of the film letting-off device A, in which a film width enlarging roller G1 is assembled just upstream of the drive roller device D.
FIG. 17 presents a front elevation (A) and a side elevation (B), respectively, of the film width enlarging roller G1.
FIG. 18 presents a front elevation (A) and a side elevation (B), respectively, of a film width enlarging roller G2.
FIG. 19 is a front arrangement elevation of a major portion of the film letting-off device A" of the prior art.

### [Embodiment]

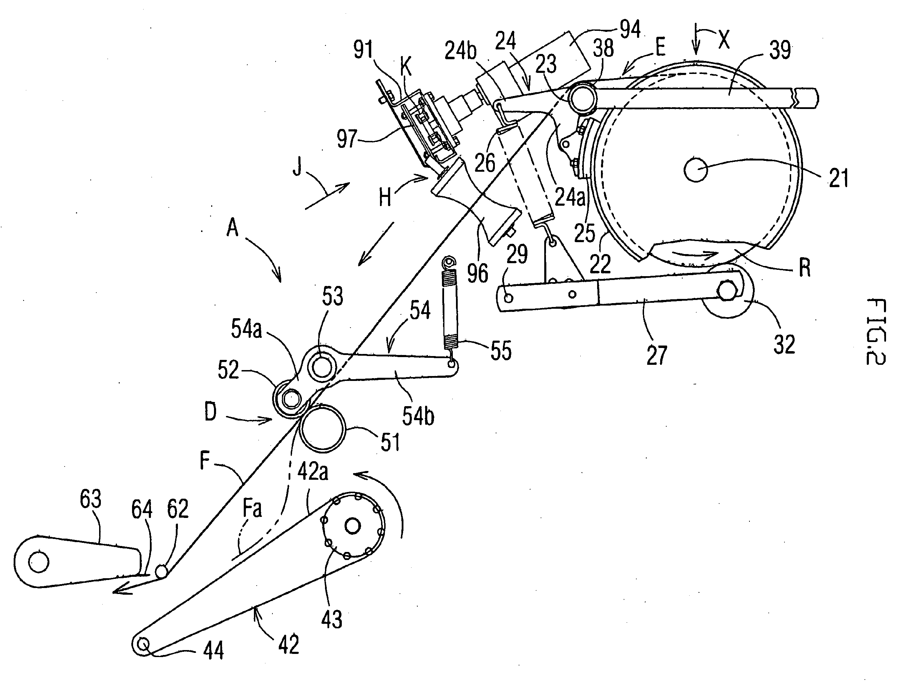

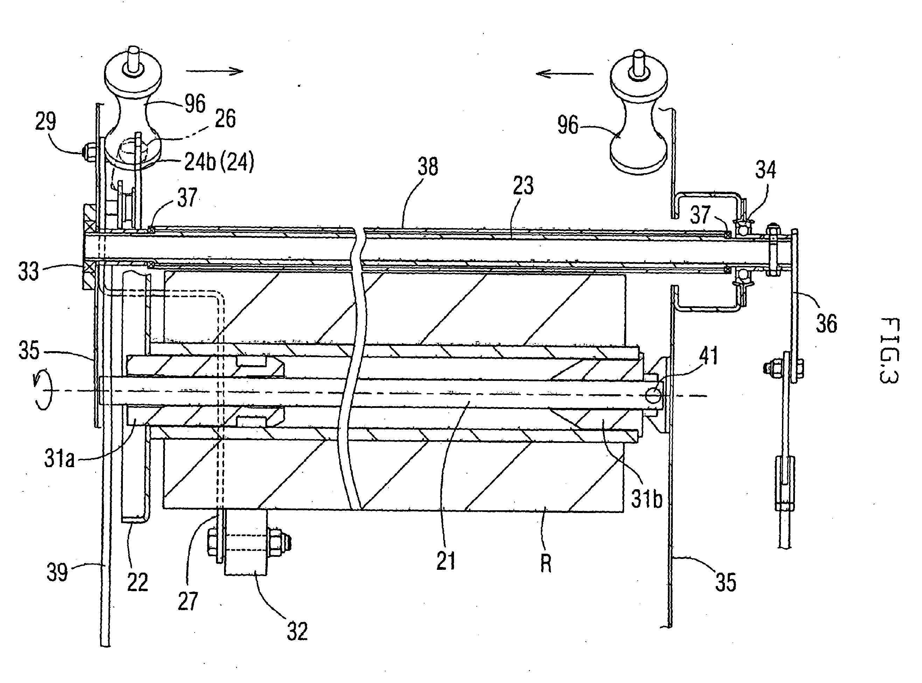

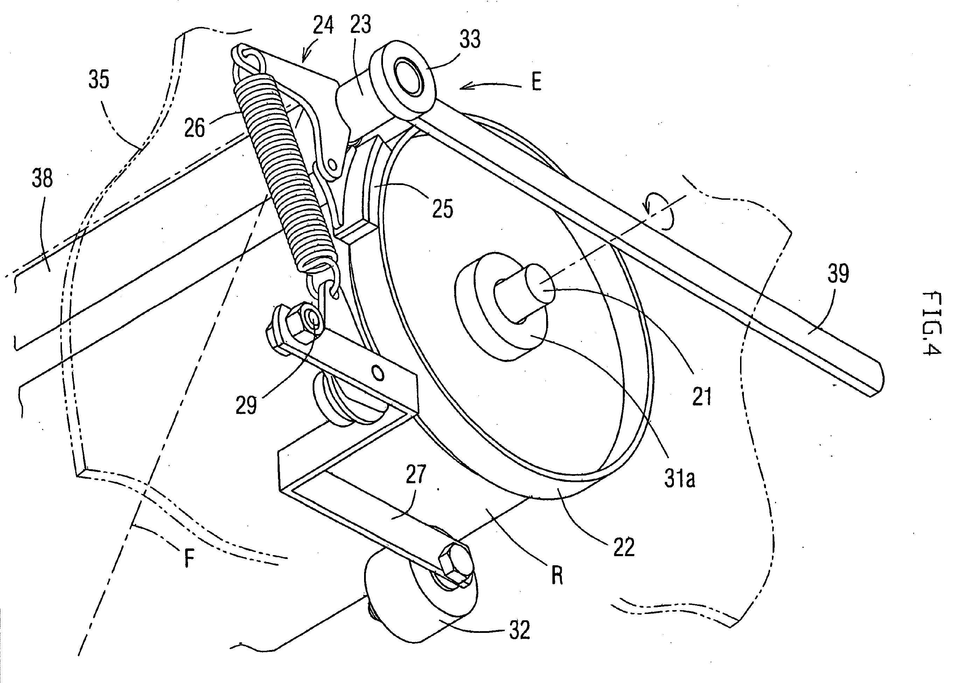

The invention is described in more detail in detail in connection with its best embodiment. At first, a film letting-off device A according to the invention is described with reference to FIG. 1 to FIG. 4. FIG. 1 is an entire view of a roll baler provided with a film letting-off device A according to the invention; FIG. 2 is an enlarged view of the film letting-off device A; FIG. 3 is a sectional view taken in the direction arrow X of FIG. 2 (or a sectional top plan view of a film rolling device E); and FIG. 4 is a perspective view of a portion of the film rolling device E on the side of a brake shoe 25. Here in the descriptions of the film letting-off device A, the portions identical or equivalent to those of the net letting-off device A" of the prior art are designated by the common reference numerals while resorting to the foregoing descriptions. The detail descriptions are made only on the portions specific to the film letting-off device A of the invention. The entire schematic constitution of the roll baler is briefly described at first, and the portion of the film letting-off device A according to the invention is then described in detail.

The most of a machine body 2, as equipped with running wheels 1, constitutes a roll baling device B for forming a rolled bale V, and the film letting-off device A according to the invention is arranged upstream of the roll baling device B. This roll baling device B has its compression-shaping chamber 5 formed of a front chamber 3 integrated with the machine body 2, and a rear chamber 4 for turning obliquely backward and upward with respect to that chamber 3. A pair of right and left endless chains 6 to run circumferentially in an endless manner is connected by a multiplicity of shaping bars 7 at a predetermined spacing. The endless chains 6 are made to run doubly inside and outside between a single drive sprocket 8 and a plurality of driven sprockets 9a to 9c so that the compression-shaping chamber 5 is formed of the multiple shaping bars 7 connected to the paired right and left endless chains 6 running on the inner side. Obliquely below the front of the compression-shaping chamber 5, there is formed an input port 11 for introducing the cut hay and so on. Obliquely above and below the input port 11, respectively, there are a front roller 12 and a bottom roller 13 for promoting the rotations of the rolled bale V being shaped. Moreover, the machine body 2 is equipped with a pickup device 14 for picking up the hay or the like mowed down and scattered on the field, and a feed roller 15 for feeding the hay or the like picked up, from the input port 11 into the compression-shaping chamber 5. In FIG. 1, numeral 16 designates a towing lever attached to the leading end portion of the machine body 2.

Next, the film letting-off device A is described with reference to FIG. 1 to FIG. 4. The film rolling device E is a device for letting off a film roll R, and is supported on a film roll supporting shaft 21 through a pair of right and left film bushes 31a and 31b. A brake drum 22 is integrally attached to one film bush 31a so that the brake shoe 25 makes sliding contact with the brake drum 22. A tension arm 27 is bent in a top plan view, and a resin roller 32 rotatably mounted on the leading end portion of the tension arm 27 is pushed substantially below of the film roll R by the restoring force of a tension spring 26 so that the contact between the film roll R and the resin roller 32 establishes a rolling resistance.

On the other hand, a brake arm shaft 23 is rotatably supported in two side plates 35 through a bearing 33 and a unit bearing 34. At the ordinary film letting-off time, however, the brake arm shaft 23 does not rotate. In an emergency, an automatic brake releasing link 36 integrally attached to one end portion of the brake arm shaft 23 is turned downward by the hydraulic cylinder (although not shown) thereby to turn the brake arm shaft 23 so that the brake is electrically released. Therefore, an idle roller 38 is rotatably fitted through a pair of right and left bearings 37 on the outer side of the brake arm shaft 23, which does not rotate at the ordinary film letting-off time. Moreover, a manual brake releasing lever 39 is integrally attached to the other end portion of the brake arm shaft 23 so that the brake is released to facilitate the replacement of the film roll R by pushing down the lever 39 to release the brake. Moreover, the film roll supporting shaft 21 is so connected to one shaft end portion through a pivot pin 41 that it can rotate in a top plan view so as to replace the film roll R. Here, the remaining constitutions and actions of the film rolling device E are identical to those of the net rolling device E', which has been described in the item of "Background Art".

In the invention, moreover, a conveyor belt 42 for circumferentially running at all times is adopted in place of the sliding plate 65, which is arranged in the net letting-off device A" of the prior art at an inclination just upstream of the rolled bale V so as to support the net ends before the next wrapping. Specifically, the conveyor belt 42 is made to run between a diametrically larger driving cage roller 43 and a diametrically smaller driven roller 44, which is positioned so far as to reach obliquely backward below a guide roller 62. As a result, a film end portion Fa hangs down over the upper face 42a of the conveyor belt 42 running circumferentially at all times, and is continuously fed at all times to the rolled bale V so that it is not caught on the side of a drive roller device D. When a film F is introduced by the drive roller device D started, the film end portion Fa is smoothly fed, as it is, to the side of the rolled bale V.

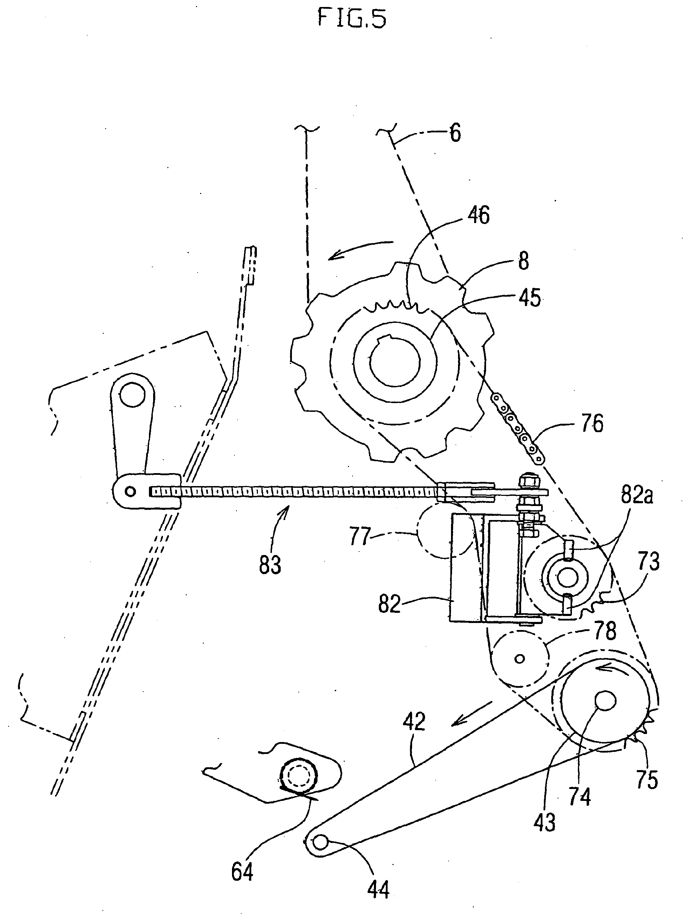

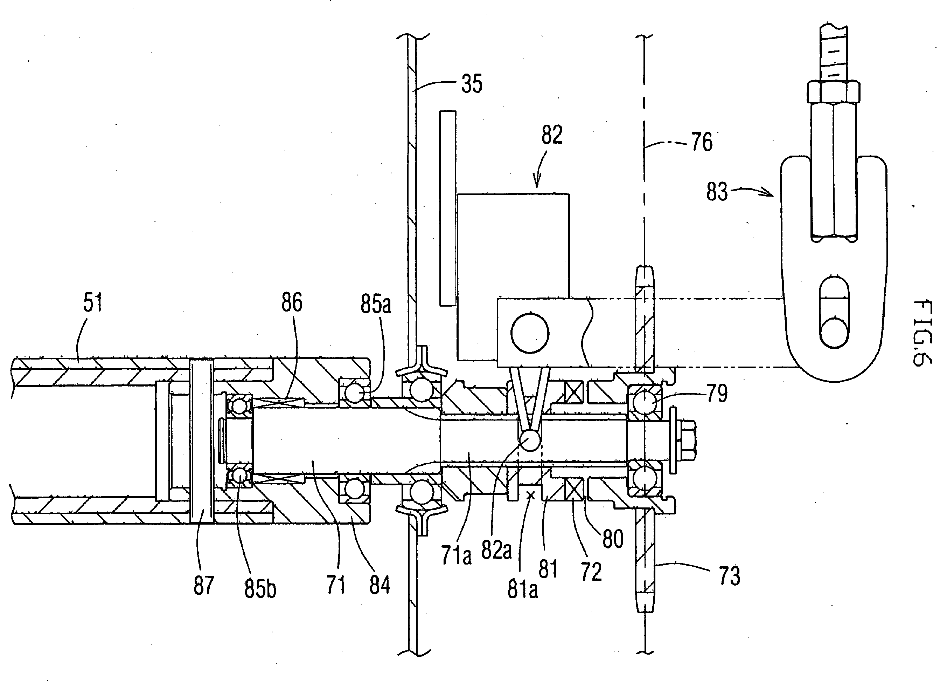

Next, the power transmission mechanism of a rubber roller 51 of the drive roller device D and the driving cage roller 43 for causing the conveyor belt 42 to run circumferentially thereof is briefly described with reference to FIG. 5 and FIG. 6. FIG. 5 and FIG. 6 are a front elevation and a top plan view of the power transmission mechanism, respectively. Both the rubber roller 51 of the drive roller device D and the driving cage roller 43 are rotationally driven by the power of a drive shaft 45 of the drive sprocket 8 constituting the roll baling device B, and the drive roller device D has to be activated only at the wrapping time of the film F after the rolled bale V is shaped. Therefore, a clutch 72 is assembled with a drive shaft 71 of the rubber roller 51. A chain 76 is made to run on another drive sprocket 46 attached to the drive shaft 45, a sprocket 73 attached to the drive shaft 71 of the rubber roller 51, and a sprocket 75 attached to a drive shaft 74 of the driving cage roller 43. Here in FIG. 5, both numerals 77 and 78 designate tensing sprockets. Moreover: the sprocket 73 is attached through a bearing 79 to the drive shaft 71 of the rubber roller 51; a slider 81 is so fitted on a spline shaft portion 71a formed at one end portion of the drive shaft 71 as to slide slightly in the axial direction; and a pair of upper and lower portions 82a constituting a clutch shifter 82 are retained in a grooved portion 81a of the slider 81. Moreover, the drive shaft 71 is rotatably supported through bearings 85a and 85b in an end bush 84 fitting the rubber roller 51 thereon, and a one-way clutch 86 is interposed between the end bush 84 and the drive shaft 71. Moreover, the end bush 84 and the rubber roller 51 are integrally connected through a connecting pin 87. When the clutch shifter 82 is moved finely in the axial direction of the drive shaft 71 by a shifter activating mechanism 83 thereby to separate the clutch 72 attached to one end portion of the slider 81 and a shaft portion 73a of the sprocket 73 (FIG. 6 shows the state, in which a predetermined clearance 80 is formed between the clutch 72 and the shaft portion 73a of the sprocket 73), the transmission power is blocked to make the rubber roller 51 irrotational. At the same time, when the shaft portion 73a of the sprocket 73 and the slider 81 are connected through the clutch 72, the power of the drive shaft 71 is transmitted to the rubber roller 51 through the one-way clutch 86 and the connecting pin 87 so that the rubber roller 51 is driven to rotate. Moreover, the individual tooth numbers of the drive sprocket 8 of the roll baling device B and the sprocket 73 of the rubber roller 51, and the external diameter of the rubber roller 51 are so determined that the individual circumferential speeds of the rolled bale V and the rubber roller 51 may be identical.

Thus, the power of the drive shaft 45 constituting the roll baling device B is transmitted through the clutch 72 intermittently to the rubber roller 51 constituting the drive roller device D but always to the driving cage roller 43 of the conveyor belt 42. As a result, the conveyor belt 42 circumferentially runs at all times.

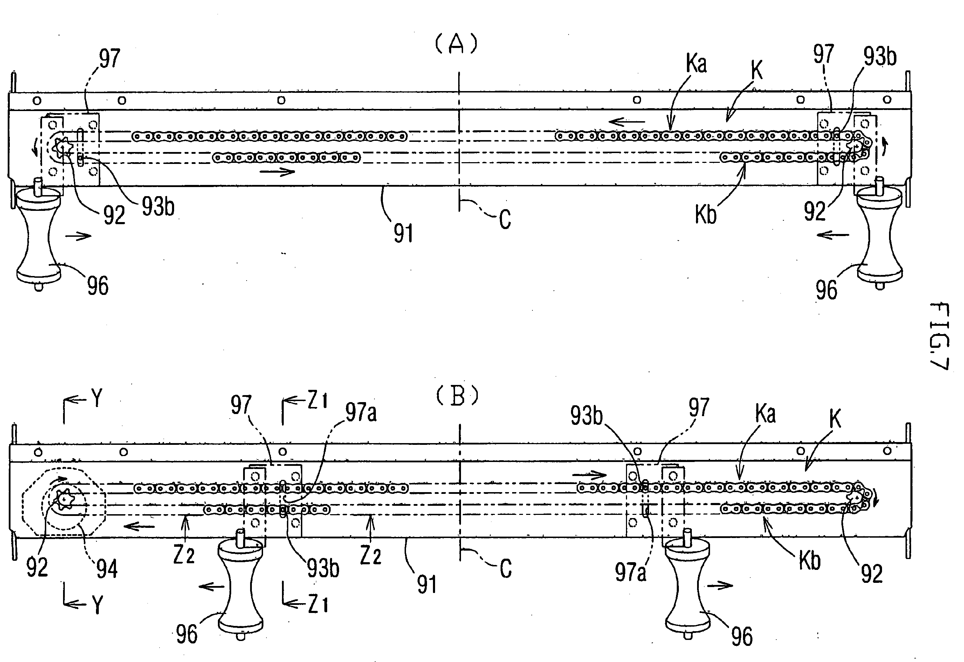

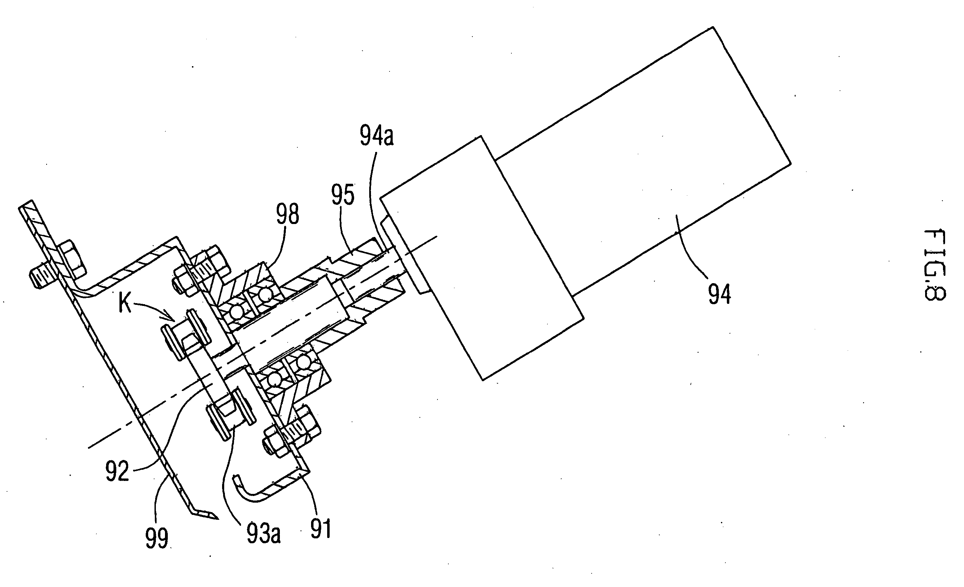

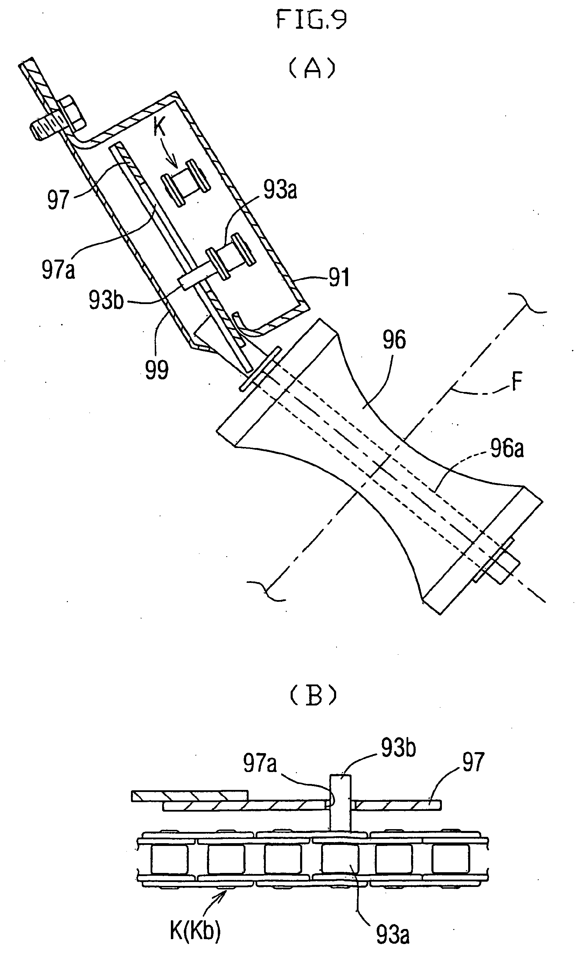

Next, a width reducing device H to be arranged between the film rolling device E and the drive roller device D is described with reference to FIG. 1, FIG. 2 and FIG. 7 to FIG. 8. FIG. 7 presents front elevations (A) and (B) (taken in the direction of arrow J of FIG. 2) of the width reducing device H of the cases, in which the film F is let off with a specified width (or an ordinary width) and a reduced width, respectively; FIG. 8 is an enlarged sectional view taken along line Y - Y of FIG. 7 (B) ; and FIG. 9 presents enlarged sectional views (A) and (B), which are enlarged along lines Z1-Z1 and Z2 - Z2 of FIG. 7(B), respectively. The width reducing device H is a device for reducing the width of the film F, as let off from the film rolling device E immediately before the winding end, when the rolled bale V shaped is to be wrapped on its outer circumference with the film F so that it may be baled. A chain case 91 having a generally C-shaped section is so horizontally fixed and arranged that its open face is directed in a side view to the side of the drive roller device D and makes an acute angle near 90 degrees with respect to the running face of the film F. An endless roller chain K is made to run between chain gears 92 supported at the two longitudinal end portions of the chain case 91. A rotation pin 92a of the chain gear 92 arranged at the end portion on the opposite side of a brake arm 24 and a drive shaft 94a of a motor 94 are connected to each other through a coupling 95, so that the roller chain K is caused to run circumferentially in two positive and negative directions by the driving force of the motor 94. As shown in FIG. 7 and FIG. 9, a pair of width reducing rollers 96 is so individually connected through connecting plates 97 to the individual straight running portions Ka and Kb of the roller chain K that they move close to and apart from each other while being centered. The width reducing rollers 96 are shaped to have their external diameters abruptly reduced from the two ends along the axial direction to the centers so that they can hold the end portions of the running film F without floating. Here in FIG. 8, numeral 98 designates a housing, which is attached to the back side of the chain case 91 so as to support the rotation pin 92a of the chain gear 92. In FIG. 9 (A), numeral 99 designates a cover closing the opening of the chain case 91.

From two specific rollers 93a constituting the roller chain K, specifically, pins 93b are protruded toward the opening side of the chain case 91. The specific two rollers 93a having the protruded pins 93b are arranged in the straight running portions Ka and Kb of the roller chain K, respectively, and at an equal distance from the widthwise center line C of the film F let off from the film rolling device E. At the central portions of the transverse direction of the connecting plate 97 (or of the longitudinal direction of the chain case 91), on the other hand, slots 97a are vertically formed. Into the slot 97a of one of the paired right and left connecting plates 97, there is inserted the pin 93b, which is protruded from one of the two specific rollers 93a constituting the roller chain K. Into the slot 97a of the other connecting plate 97, there is inserted the pin 93b, which is protruded from the other of the two specific rollers 93a constituting the roller chain K. Moreover, the width reducing rollers 96 are welded and fixed at their support pins 96a to the outer side end portions of the paired right and left connecting plates 97. The support pins 96a of the width reducing rollers 96 are welded at such a slight inclination to the plate faces of the connecting plates 97 as are normal to the running face of the film F.

When the roller chain K is caused to run circumferentially by the motor 94, therefore, the paired right and left width reducing rollers 96 come close to and apart from each other while being centered with respect to the widthwise center line C of the film F. When the paired right and left width reducing rollers 96 are brought close to each other while the film F is being let off from the film rolling device E, therefore, the two widthwise end portions of the film F are brought close to the sides of the central portion so that the width of the film F is narrowed. In the invention, immediately before the winding end of the film F when the rolled bale V is wrapped with the film F, the paired right and left width reducing rollers 96 are brought close to each other thereby to reduce the width of the film F. In this state, the baling action is ended, and the narrowed film F is cut.

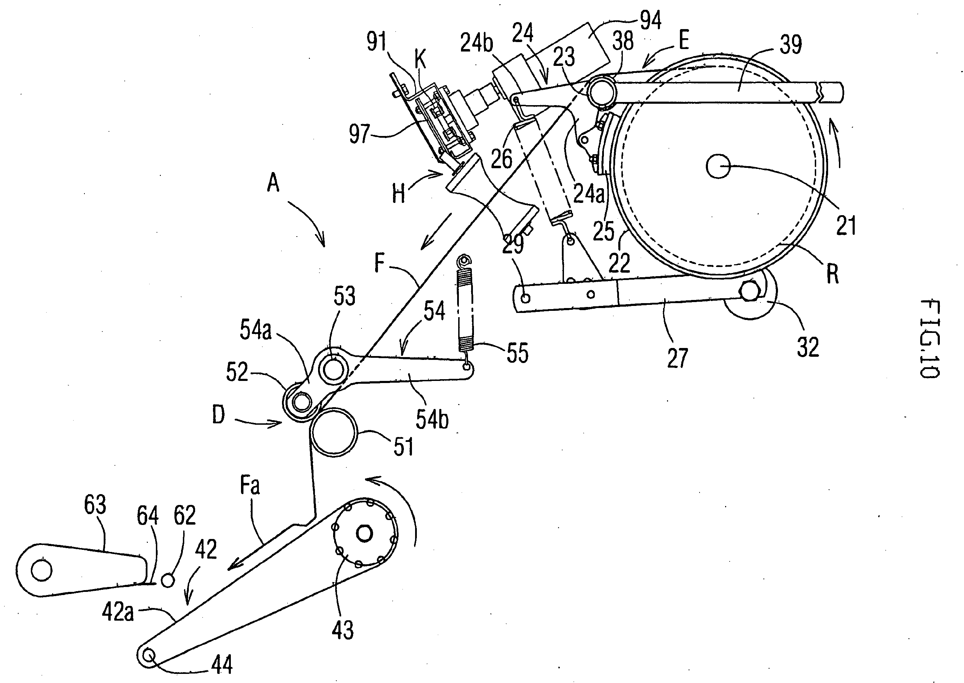

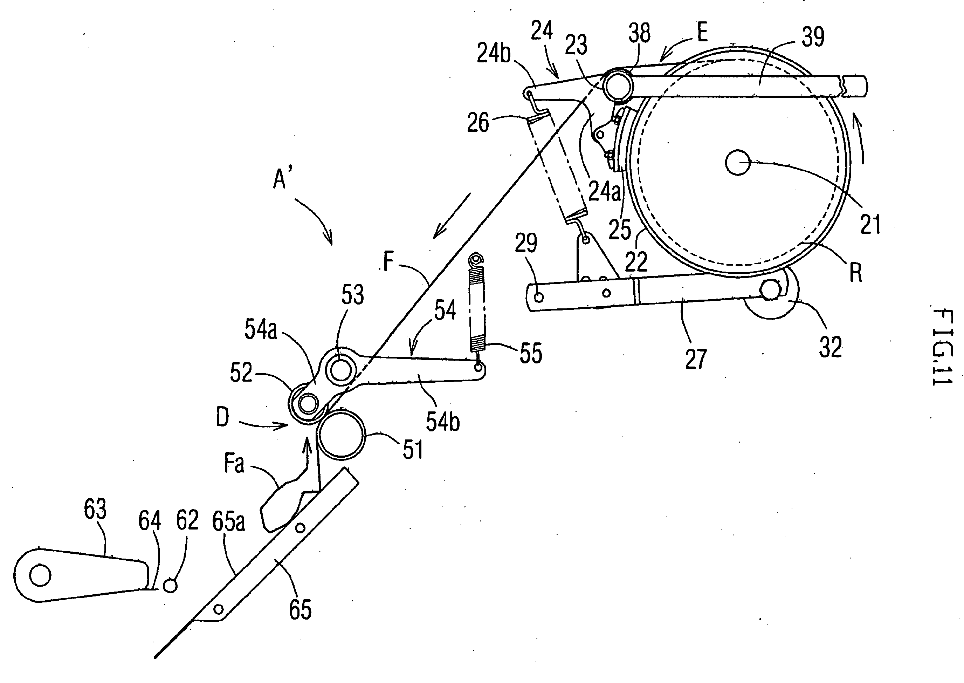

Next, the actions of the aforementioned film letting-off device A are described with reference to FIG. 1 to FIG. 11. FIG. 10 is a front arrangement elevation of the film letting-off device A, and shows the state, in which the film end portion Fa hanging down over the conveyor belt 42 is smoothly transferred to the side of the rolled bale V, and FIG. 11 is a front arrangement elevation of a film letting-off device A' , and shows the state, in which the film end portion Fa hanging down over the sliding plate 65 gets entangled on the side of the drive roller device D. When the roll baling device B is driven with the rolled bale being towed, the hay and so on mowed down and scattered is picked up by the pickup device 14, and is then thrown from the input port 11 into the compression-shaping chamber 5 by the rotation of the feed roller 15. The multiple shaping bars 7, as forming the compression-shaping chamber 5, on the inner circumference run circumferentially in the clockwise direction, so that the hay and so on thrown into the compression-shaping chamber 5 grow sequentially into the rolled bale V of a larger diameter while being turned by the shaping bars 7. The shaping pressure of the rolled bale V having reached the maximum external diameter is detected by the pressure sensing device (although not shown). When this shaping pressure reaches a predetermined level, the aforementioned shifter activating mechanism 83 acts to turn "ON" the clutch 72 and the sprocket 73 rotating freely with respect to the drive shaft 71 of the rubber roller 51 rotates integrally with the drive shaft 71 and thereby drives the rubber roller 51 to rotate. In short, the drive roller device D is started.

Here, when the pulling force (or the extracting force) is caused to act on the film F by the action of the drive roller device D, the film roll R is rotated against the braking force generated the sliding contact of the brake shoe 25 with the brake drum 22, so that the film F is let off from the film roll R. Moreover, the film F thus let off from the film roll R is made to wrap on the idle roller 38 fitted rotatably on the outer circumference of the brake arm shaft 23, so that the idle roller 38 is rotated as the film F is let off. Specifically, the direct contact is made not between the film F let off and the brake arm shaft 23 but between the idle roller 38 fitted on the outer circumference of the brake arm shaft 23 and the film F so that the idle roller 38 rotates correspondingly as the film F is let off. As a result, the contact resistance with the idle roller 38 at the letting-off time of the film F becomes the rolling resistance. Therefore, the film F is let off with a remarkably low resistance from the film roll R so that the film F is smoothly let off. At the letting-off time, moreover, the film F only contacts with the freely rotating idle roller 38 so that it is not damaged.

Moreover, the intermediate portion of the tension arm 27 supported rotatably on a pivot pin 29 at one end and the leading end portion of an arm portion 24b of the crank-shaped brake arm 24 supported turnably on the brake arm shaft 23 are connected by the tension spring 26, and the resin roller 32 is rotatably supported at the leading end portion of the tension arm 27. The resin roller 32 at the leading end portion of the tension arm 27 contacts with the outer circumference of the film roll R thereby to detect such a winding diameter of the film roll R as is gradually reduced as the film F is let off. As a result, the resistance between the film roll R and the resin roller 32 or the outer circumference contacting member becomes a far lower rolling resistance than the sliding resistance, and the damage of the film roll R is eliminated. Moreover, the roller 32 or the outer circumference contacting member is made of a resin, so that it establishes no static electricity even if it contacts with the rotating film roll R. This also causes the film F to be smoothly let off.

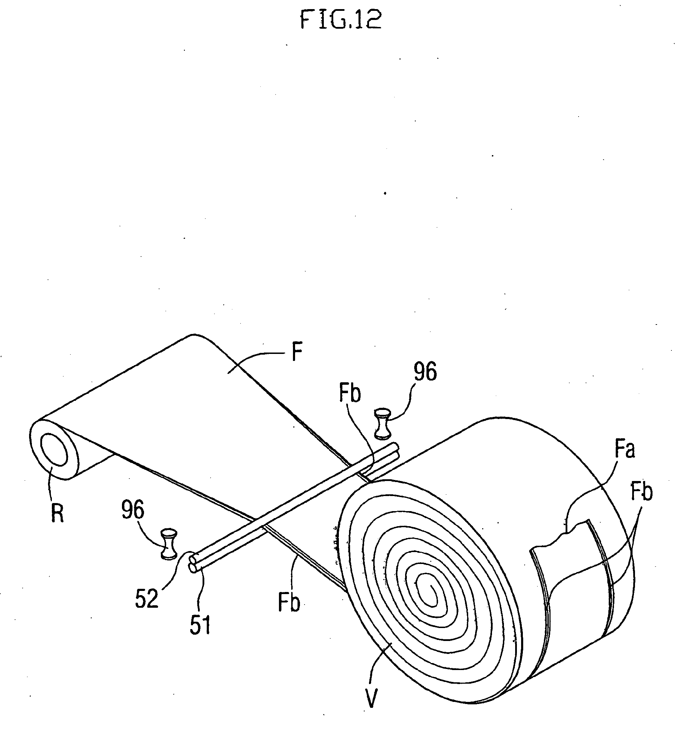

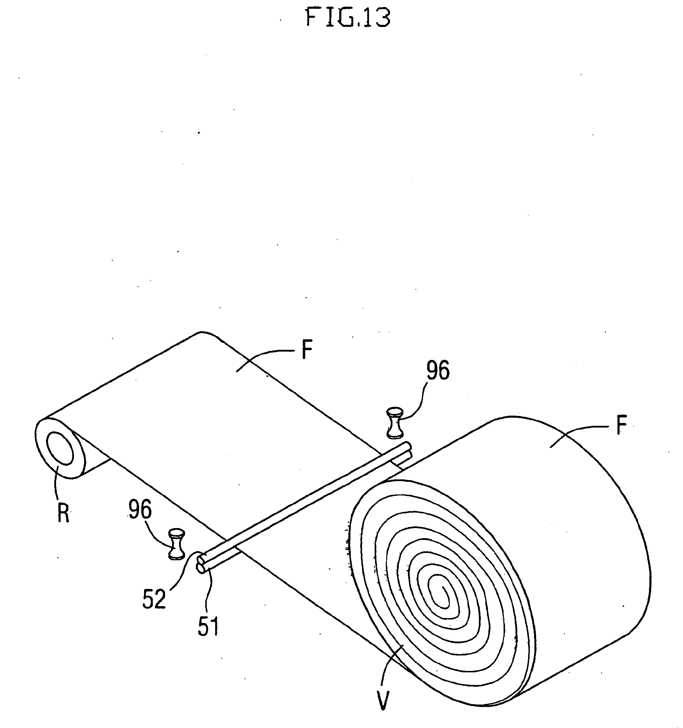

On the other hand, the power of the drive sprocket 8 constituting the roll baling device B is always transmitted to the driving cage roller 43 so that the conveyor belt 42 circumferentially runs at all times. As indicated by a double-dotted line in FIG. 2, therefore, the film end portion Fa has been wound on the immediately preceding rolled bale V, and has hung down over the upper face 42a of the conveyor belt 42. This film end portion Fa is smoothly fed, when the film F is fed to the side of the conveyor belt 42 by the start of the drive roller device D, obliquely backward and downward by the circumferential run of the conveyor belt 42. After this, the film F is wound on the outer circumference of the rolled bale V with the assistance of the rotation of the bottom roller 13 (as referred to FIG. 12 and FIG. 13).

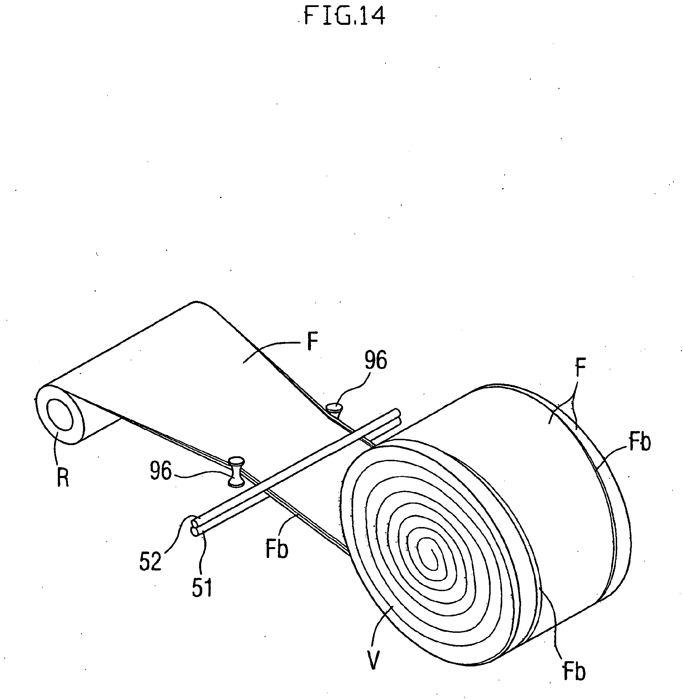

For the whole winding length of the film F on the rolled bale V, the number of rotations of the idle roller 38 arranged at the letting-off portion of the film rolling device E is electrically read by a sensor (although not shown). When the film F is let off by a set length, the motor 94 is activated so that the paired right and left width reducing rollers 96 approach each other to a preset position while keeping the distance equal to the widthwise center line C of the film F, i.e., while centering, as shown in FIG. 7(B) and FIG. 14. As a result, the two end portions of the film F being let off are forcibly brought to the side of the center line C, i.e., individually to one portion so that the folding strengths of the two end portions of the film F are drastically enhanced. Thus, the bending strengths of the two end portions of the film F are drastically enhanced, and the clearance for the wind flow is additionally formed between the right and left side walls 35 (as referred to FIG. 3) of the letting-off device of the film F and the two end portions of the film F narrowed. As a result, the two end portions of the film F do not flutter (or flap) in the wind so that the last portion of the film F is smoothly wound on the outer circumference of the rolled bale V. Here, the two end portions of the final winding portion of the film F are enhanced in the bending strength so that the film F on the lower side is hard to wrap. However, the rolled bale V is frequently wrapped by the wrapping machine after wound with the film. It raises no problem that the last wound portion of the film F is insufficiently wound.

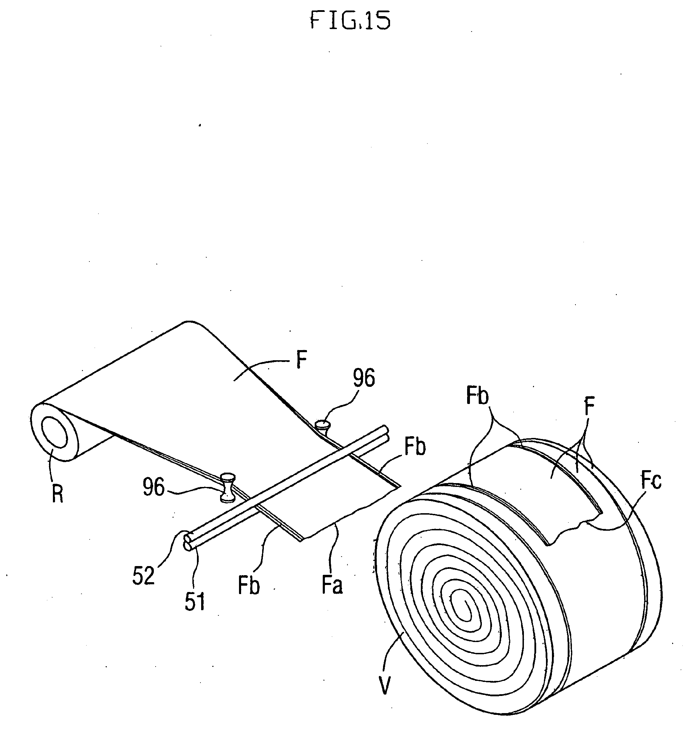

When the film F of a set length is let off from the film rolling device E, moreover, the roll baling device B stops, and the drive roller device D stops, but the motor 94 is started so that the paired right and left width reducing rollers 96 at the closest positions leave each other to restore their original positions. After this, the film F under a predetermined tension is cut with the knife 64 at the leading end by turning the knife base 63. As shown in FIG. 2 and FIG. 15, the film end portion Fa cut hangs down, as it is, over the upper face 42a of the conveyor belt 42 running circumferentially at all times. This handing state is held for the winding operation of the next rolled bale V. On the other hand, the leading end portion Fa of the film F hanging down over the upper face 42a of the conveyor belt 42 remains narrow. At the starting time of winding the film F on the next rolled bale V, therefore, the two end portions of the film F do not flutter in the wind so that the winding operation is smoothly started. Here in FIG. 12 to FIG. 15, letters Fb designate the two end portions of the film narrowed, and letters Fc designate the cut end portions of the film F.

When the roll baling device B stops, on the other hand, the motor 94 rotates reversely, and then the paired right and left width reducing rollers 96 restore the original positions shown in FIG. 7(A) and FIG. 12. Here, the rolled bale V (as referred to FIG. 15), which was baled by wrapping the outer circumference only several times with the film F, is rolled and discharged to the back of the machine body 2 by turning the rear chamber 4 obliquely backward and upward on a turning pivot pin 17.

Moreover, the mechanism for bringing the paired right and left width reducing rollers 96 close to and apart from each other while centering them can also be exemplified by a rack/pinion mechanism, which is constituted of not only the endless roller chain K but also a pair of racks arranged to confront each other and a pinion for meshing both the paired racks.

Here, the film letting-off device A' shown in Fig. 11 uses the sliding plate 65 as in the net letting-off device A" of the prior art, in place of only the conveyor belt 42 in the aforementioned film letting-off device A. When the film end portion Fa hangs down over the slope face 65a of the sliding plate 65 arranged at an inclination, the film F cannot be fed obliquely backward and downward, if the drive roller device D is activated at a next wrapping time, exclusively with the inclination of the sliding plate 65 due to the dust or water soiling the slope face 65a of the sliding plate 65, but is left on the slope face 65a of the sliding plate 65. Depending on the let-off state of the film F from the drive roller device D, the film end portion Fa floats from the sliding plate 65 and then flows back so that it is entangled by the rubber roller 51 or the aluminum roller 52 thereby to make the feed of the film F impossible. The difficulty thus far described is eliminated by using the conveyor belt 42 running circumferentially at all times.

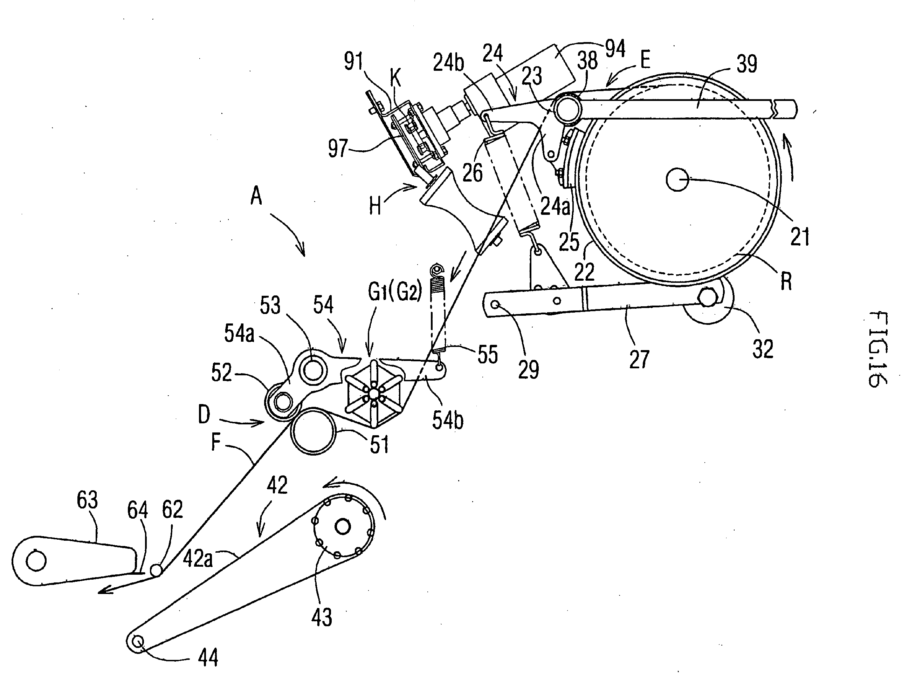

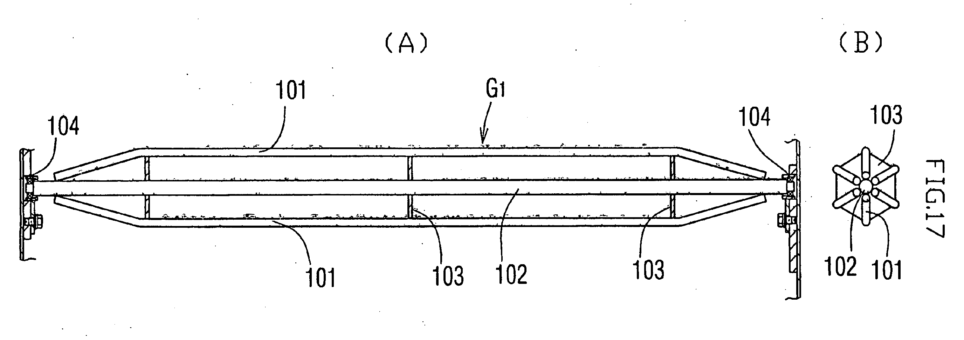

Moreover, the film F is reduced (or narrowed), when subjected to the tension at the letting-off time, in the widthwise size. In case, therefore, the rolled bale V is wrapped with the film F of the specified width, there arises a drawback that the rolled bale V cannot be wrapped all over its width. With the ordinary tension, the film F is narrowed by several tens mm from the specified width. As shown in FIG. 16 to FIG. 18, therefore, the aforementioned drawback can be eliminated by incorporating film width enlarging rollers G1 and G2 midway of the running path of the film F let off from the film roll R. In the example shown in FIG. 9, the film width enlarging roller G1 is freely rotatably supported at a portion in the running path of the film F immediately upstream of the drive roller device D. The film width enlarging roller G1 is constituted of a cage roller, which is integrated, as shown in FIG. 17, by arranging a plurality of outer circumferential rods 101 having two end portions bent at a gentle angle, radially with respect to a center rod 102, and by connecting the outer circumferential rods 101 with connecting plates 103 arranged in the radial direction, and the center rod 102 is supported at its two end portions by bearings 104. Thus, the film width enlarging roller G1 is made conical only at its two end portions, and is diametrically smaller than the central portion. As a result, the two end portions have a lower circumferential speed than that of the central portion so that the two end portions are delayed at the running time of the film F. Thus, it is possible to prevent the width of the film F from becoming narrower.

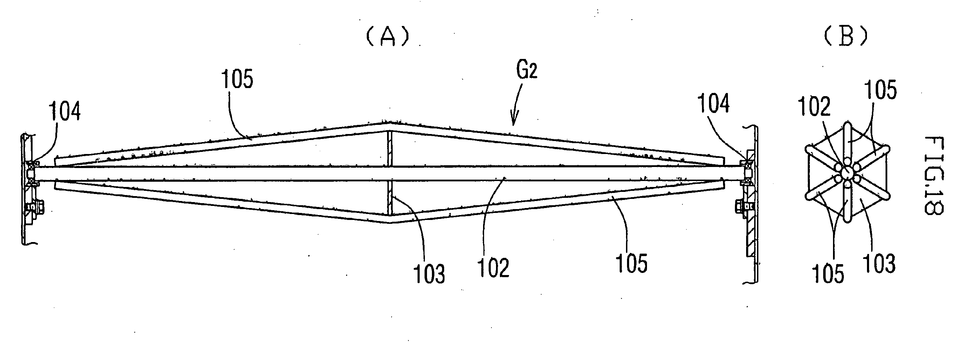

On the other hand, the film width enlarging roller G2, as shown in FIG. 18, is integrated by arranging a plurality of outer circumferential rods 105 having their central portions bent at a gentle angle, radially with respect to the center rod 102, and by connecting the outer circumferential rods 105 with the connecting plates 103 arranged in the radial direction. The film width enlarging roller G2 is inclined in its entirety from the axial center portion to the two ends. This constitution highly enhances the effect to prevent the film F from being narrowed in width while running. Here, the film width enlarging rollers are conditioned by the fact that the two end portions have a smaller diameter than that of the central portion. The cage roller is advantageous for easily manufacturing the rollers satisfying the aforementioned conditions. However, the film width enlarging roller should not be limited to the cage roller but can also employ the roller, of which the two end portions are radially narrowed than the central portion by a machining operation.

## Claims

1. A film letting-off device (A) for roll baler, which is arranged immediately upstream of a roll baling device (B) for covering and wrapping the outer circumference of a rolled bale (V) with a film (F), for letting off said film (F), comprising:
a film rolling device (E) constituted such that a brake drum (22) is integrally mounted on a film roll supporting shaft (21) for supporting a film roll (R) wound in a roll shape, such that a brake arm shaft (23) acting as a film letting-off shaft is arranged in the letting-off portion of said film roll (R) and in parallel with said film roll supporting shaft (21), and such that a brake shoe (25) for turning on said brake arm shaft (23) and an outer circumference contacting member (32) for contacting with the outer circumference of the film roll (R) supported on said film roll supporting shaft (21) are pushed by biasing means (26) onto the brake drum (22) and the film roll (R), respectively;
a drive roller device (D) arranged midway of a film running path between the letting-off portion of said film rolling device (E) and a coverage starting portion for starting the coverage of a rolled bale (V) shaped by the roll baling device (B), for applying a pulling force to the film (F) wound on said film roll (V), thereby to extract said film (F); and
a film end portion supporting device (42) arranged at an inclination in the portion immediately upstream of said coverage starting portion in said film running path, for supporting said film end portion (Fa) having been wrapped with the film (F) let off from said film letting-off shaft (23) and guided by a guide roller (51) arranged midway of the film running path to coat said rolled bale (V), till a next wrapping,
**characterized in that** a freely rotating idle roller (38) is fitted on the outer side of the brake arm shaft (23) constituting said film rolling device (E), and **in that** said outer circumference contracting member (32) is constituted of a rotatable roller (32) made of a material hard to generate static electricity.

2. A film letting-off device (A) for roll baler, as set forth in claim 1, **characterized in that** said film end portion supporting device (42) is constituted of a conveyor belt running circumferentially at all times.

3. A film letting-off device (A) for roll baler, as set forth in claim 1 or 2, **characterized in that** said film running path has width enlarging rollers (96) incorporated thereinto for enlarging the width of the running film (F).

## Patentansprüche

1. Vorrichtung zum Ablassen von Folie (A) für eine Rollballenpresse, die einer Ballenrollvorrichtung (B) zum Umhüllen und Einwickeln des äußeren Umfangs eines gerollten Ballens (V) mit einer Folie (F) unmittelbar vorgeschaltet angeordnet ist, zum Ablassen der Folie (F), mit:
einer Folienrollvorrichtung (E), die so ausgebildet ist, dass eine Bremstrommel (22) integral auf einer Folienrollenhalterungswelle (21) zum Halten einer Folienrolle (R), die in eine Rollenform aufgewickelt ist, befestigt ist, so dass ein Bremsarmschaft (23), der als eine Folienablassschaft fungiert, im Ablassbereich der Folienrolle (R) und parallel zu der Folienrollenhalterungswelle (21) angeordnet ist, und so dass ein Bremsschuh (25) zum Andrehen des Bremsarmschafts (23) und ein Außenumfangsberührungsbauteil (32) zum Berühren des äußeren Umfangs der Folienrolle (R), die auf der Folienrollenhalterungswelle (21) gehalten wird, durch Vorspannmittel (26) auf die Bremstrommel (22) bzw. auf die Folienrolle (R) gedrückt werden;
einer Rollantriebsvorrichtung (D), die in der Mitte eines Folienverlaufswegs zwischen dem Ablassbereich der Folienrollvorrichtung (E) und einem Umhüllungs-Startbereich zum Starten der Umhüllung eines gerollten Ballens (V), der durch die Ballenrollvorrichtung (B) geformt ist, angeordnet ist, zum Aufbringen einer Zugkraft auf die Folie (F), die auf die Folienrolle (V) aufgewickelt ist, dass die Folie (F) herausgezogen wird; und
einer Folienendbereichhalterungsvorrichtung (42), die in einer Neigung in dem Bereich, der dem Umhüllungs-Startbereich des Folienverlaufswegs unmittelbar vorgeschaltet ist, zum Halten des Folienendbereichs (Fa), der mit der Folie (F) eingewickelt wurde, die zum Ummanteln des gerollten Ballens (V) vom Folienablassschaft (23) abgelassen und von einer Führungsrolle (51) geführt wird, die in der Mitte des Folienverlaufwegs angeordnet ist, bis zu einem nächsten Umwickeln angeordnet ist,
**dadurch gekennzeichnet, dass** eine frei drehende, nicht angetriebene Rolle (38) auf der Außenseite des Bremsarmschafts (23) angebracht ist, der die Folienrollvorrichtung (E) bildet, und dadurch, dass das Außenumfangsberührungsbauteil (32) aus einer drehbaren Rolle (32) gebildet ist, die aus einem Material hergestellt ist, das schwierig statische Elektrizität erzeugt.

2. Vorrichtung zum Ablassen von Folie (A) für eine Rollballenpresse nach Anspruch 1, **dadurch gekennzeichnet, dass** die Folienendbereichhalterungsvorrichtung (42) aus einem Förderband gebildet ist, das zu jeder Zeit umläuft.

3. Vorrichtung zum Ablassen von Folie (A) für eine Rollballenpresse nach Anspruch 1 oder 2, **dadurch gekennzeichnet, dass** der Folienverlaufsweg Breiten vergrößernde Rollen (96) aufweist, die zum Vergrößern der Breite der fortlaufenden Folie (F) dort eingebaut sind.

## Revendications

1. Dispositif de déroulement de film (A) pour ramasseuse-enrouleuse de fourrage, qui est aménagé immédiatement en amont d'un dispositif de ramassage-enroulement de fourrage (B) pour recouvrir et envelopper la circonférence externe d'un rouleau de fourrage (V) par un film (F), pour dérouler ledit film (F), comprenant :
un dispositif d'enroulement de film (E) constitué de sorte qu'un tambour de frein (22) soit monté d'une seule pièce sur un arbre de support de rouleau de film (21) pour supporter un rouleau de film (R) enroulé en forme de rouleau, de sorte qu'un arbre de bras de frein (23) servant d'arbre de déroulement de film soit aménagé dans la partie de déroulement dudit rouleau de film (R) et en parallèle avec ledit arbre de support de rouleau de film (21), et de sorte qu'un sabot de frein (25) pour activer l'arbre de bras de frein (23) et un élément (32) de mise en contact de la circonférence externe pour une mise en contact avec la circonférence externe du rouleau de film (R) supporté sur ledit arbre de support de rouleau de film (21) soient poussés par des moyens de sollicitation (26) sur le tambour de frein (22) et le rouleau de film (R), respectivement ;
un dispositif à rouleau d'entraînement (D) aménagé à mi-parcours d'une voie de roulement du film entre la partie de déroulement dudit dispositif d'enroulement de film (E) et une partie de démarrage de couverture pour commencer à couvrir un rouleau de fourrage (V) façonné par le dispositif de ramassage-enroulement (B) pour appliquer une force de traction sur le film (F) enroulé sur ledit rouleau de film (V), de manière à extraire ledit film (F) ; et
un dispositif de support de partie d'extrémité de film (42) aménagé sous une certaine inclinaison dans la partie immédiatement en amont de ladite partie de démarrage de couverture de ladite voie de roulement de film pour supporter ladite partie d'extrémité de film (Fa) qui a été enroulée par le film (F) déroulé dudit arbre de déroulement de film (23) et guidé par un rouleau de guidage (51) aménagé à mi-parcours de la voie de roulement du film pour recouvrir ledit rouleau de fourrage (V) jusqu'à l'enroulement suivant,
**caractérisé en ce qu'**un rouleau fou tournant librement (38) est ajusté sur le côté externe de l'arbre de bras de frein (23) constituant ledit dispositif d'enroulement de film (E) et **en ce que** ledit élément (32) de mise en contact de la circonférence externe est constitué d'un rouleau rotatif (32) fabriqué en matériau dur pour générer de l'électricité statique.

2. Dispositif de déroulement de film (A) pour rouleau de fourrage selon la revendication 1, **caractérisé en ce que** ledit dispositif de support de partie d'extrémité de film (42) est constitué d'une courroie de transport se déplaçant à tout moment sur la circonférence.

3. Dispositif de déroulement de film (A) pour ramasseuse-enrouleuse de fourrage selon la revendication 1 ou 2, **caractérisé en ce que** ladite voie de roulement de film a des rouleaux d'élargissement (96) qui y sont incorporés pour élargir le film en mouvement (F).
